# EUROPÄISCHE PATENTSCHRIFT

(11) **EP 0 602 361 B1**
(45) Veröffentlichungstag und Bekanntmachung des Hinweises auf die Patenterteilung: **22.01.1997**
(21) Anmeldenummer: 93117549.1
(22) Anmeldetag: 29.10.1993
(51) Int. Cl.: B60N 2/22

(54) **Rückenlehnengelenk für einen Fahrzeugsitz**
Backrest articulation for vehicle seat
Articulation de dossier pour un siège de véhicule

(30) Priorität: 07.09.1993 DE 4330250; 17.11.1992 DE 4238756
(43) Veröffentlichungstag der Anmeldung: 22.06.1994
(73) Patentinhaber: C. Rob. Hammerstein GmbH, D-42699 Solingen (DE)
(72) Erfinder: Bauer, Heinz, D-42699 Solingen (DE); Becker, Burckhard, D-42655 Solingen (DE); Frohnhaus, Ernst-Reiner, D-42699 Solingen (DE)
(74) Vertreter: Bauer, Wulf, Dr.

(56) Entgegenhaltungen:
- DE-A- 2 454 190
- FR-A- 2 569 628
- US-A- 1 821 429
- US-A- 3 133 764
- US-A- 4 394 047

## Beschreibung

Die Erfindung bezieht sich auf ein Rückenlehnengelenk nach dem Oberbegriff des Patentanspruchs 1.

Ein derartiges Rückenlehenlehnengelenk ist aus der US-A-3 133 764 bekannt. Bei ihr ist der Arretierhebel aus zwei Einzelhebeln hergestellt.

Bei dem aus der DE-A-3 227 222 (A1) bekannten Rückenlehnengelenk ist ein Taumelgetriebe vorgesehen, das über ein Handrad angetrieben wird. Dieses befindet sich im wesentlichen gleichachsig zum Schwenkgelenk. Damit erfolgt die Arretierung des bekannten Rückenlehnengelenks in unmittelbarer Nähe des Schwenkgelenks. Weitere Rückenlehnengelenke sind bekannt aus der DE-A-3 729 134 (A1), DE-C-1 680 128 (C1) und DE-C-1 297 496 (C1). Auch bei diesen Rückenlehnengelenken ist die Arretiervorrichtung und die Betätigung gleichachsig zum Schwenkgelenk.

Bei dem vorbekannten Rückenlehnengelenk ist die Arretierung nicht immer gleichmäpig, weil die Verzahnung des Arretierbereichs in Abhängigkeit von der Stellung der Rückenlehne ihre Ausrichtung ändert.

Hier setzt nun die Erfindung ein. Sie hat es sich zur Aufgabe gemacht, ein Rückenlehnengelenk der eingangs genannten Art so weiterzubilden, daß die Arretierung verbessert wird.

Ausgehend von dem Rückenlehnengelenk der eingangs genannten Art wird diese Aufgabe gelöst durch die Merkmale des Patentanspruchs 1.

Nachwievor ist also der Lehnenträger am Sitzträger angelenkt. Die Arretierung erfolgt über den im Abstand vom Schwenkgelenk am Lehnenträger angreifenden Arretierhebel, der weit vor dem Schwenkgelenk (zur Sitzvorderkante hin gesehen) arretiert wird. Dadurch kann die Arretiervorrichtung und mithin auch die Betätigung des Rückenlehnengelenks etwa in der Längsmitte des Fahrzeugsitzes angeordnet werden. Sie befindet sich somit in ausreichender Entfernung von anderen Einstellvorrichtungen, beispielsweise für die Höhe der Sitzhinterkante, für die Einstellung einer Kopfstütze usw.. Dabei werden die Arretierungskräfte günstig in den Sitzträger eingeleitet.

Als vorteilhaft hat es sich herausgestellt, wenn der Anlenkpunkt, an dem der Arretierhebel am Lehnenträger angreift, sich in vertikalem Abstand oberhalb des Schwenkgelenks befindet. In diesem Fall kann das Schwenkgelenk relativ weit unten am Sitzträger angelenkt sein und der Lehnenträger muß keinen nach unten weisenden Fortsatz für das Anlenken des Arretierhebels aufweisen.

In einer anderen Ausführung hat es sich als vorteilhaft erwiesen, den Arretierhebel an einen Fortsatz angreifen zu lassen, der in Gegenrichtung zur eigentlichen Rückenlehne vom Schwenkgelenk vorspringt. In normaler Gebrauchsposition ragt er somit nach unten vor. Diese Ausbildung hat den Vorteil, daß das Schwenkgelenk relativ hoch am Sitzträger angeordnet werden kann, wozu dieser vorzugsweise in seinem hinteren Bereich einen nach oben weisenden Vorsprung hat. Unterhalb des Polsterkörpers der Rückenlehne besteht dann an der Rückseite des Fahrzeugsitzes mehr Freigängigkeit. Der Fortsatz und der Arretierhebel lassen sich nämlich so anordnen, daß auch in der stärksten Steilstellung der Rückenlehne der Anlenkpunkt des Arretierhebels am Fortsatz so wenig wie möglich nach hinten ausrückt und dort den Freiraum nicht beeinträchtigt.

Als besonders vorteilhaft hat es sich herausgestellt, den Arretierhebel L-förmig auszubilden, wobei er aus zwei Schenkeln besteht, von denen der eine im wesentlichen parallel zum Lehnenträger verläuft und im folgenden vertikaler Schenkel genannt wird und der andere im wesentlichen parallel zum Sitzträger verläuft und im folgenden horizontaler Schenkel genannt wird. Beide Schenkel stehen in einem Winkel zueinander, der nahe bei 90° liegt. Durch die L-förmige Ausbildung ist die Arretiervorrichtung und ist insbesondere der Arretierhebel praktisch ausschließlich innerhalb des Sitzträgers und des Lehnenträgers, so daß er sich hinter bzw. unterhalb des Rücken- und Gesäßbereiches eines Passagiers befindet. Dies hat insbesondere bei Sitzen mit schmalem Sitzträger und schmalem Lehnenträger Vorteile, weil bei diesen sich der Arretierhebel jeder Seite im wesentlichen unter dem Passagier befindet.

Bei L-förmiger Ausbildung des Arretierhebels kann der waagerechte Schenkel relativ lang ausgebildet werden, seine Länge bestimmt im wesentlichen den Abstand der Arretiervorrichtung vom Schwenkgelenk. Gleiches gilt für eine im wesentlichen geradlinige Ausbildung des Arretierhebels, auch hier kann die Arretiervorrichtung relativ weit vom Schwenkgelenk nach vorn versetzt werden. Dies wiederum bedeutet eine große konstruktive Freiheit in der Anordnung der Betätigung für das Rückenlehnengelenk. Eine derartige konstruktive Freiheit, die zu einem großen Spielraum für die Anordnung der Betätigung für das Rückenlehnengelenk führt, ist im Stand der Technik nicht gegeben.

Der Arretierbereich ist um einen virtuellen Drehpunkt gekrümmt, der um die effektive Länge des Arretierhebels nach vorn versetzt dem Schwenkgelenk (Achse 28) entspricht. Aufgrund dieser Krümmung des Arretierbereichs liegen die Zähne des Arretierbereichs immer und unabhängig von der Einstellung der Rückenlehne in gleicher Richtung gegenüber der Arretiervorrichtung, sodaß die Arretiervorrichtung ortsfest am Sitzträger angebracht werden kann. Eine Schwenkverbindung um einen Schwenkpunkt ist somit für die Arretiervorrichtung nicht notwendig. Dadurch können die Arretierkräfte wesentlich günstiger über die Arretiervorrichtung in den Sitzträger eingeleitet werden, auch vereinfacht sich die Konstruktion der Arretiervorrichtung.

Das erfindungsgemäße Rückenlehnengelenk lädt sich sowohl für handbetätigte Lehnenverstellungen als auch für motorisch angetriebene Lehnengelenkverstellungen einsetzen.

In bekannter Weise ist auf beiden Seiten des Sitzes jeweils ein Rückenlehnengelenk vorgesehen, beide Gelenke sind über eine querlaufende Übertragungseinrichtung (z. B. Welle) synchronisiert und haben eine gemeinsame, typischerweise an der Fahrzeugaußenseite des Sitzes liegende Betätigung.

Als sehr vorteilhaft hat es sich herausgestellt, eine die Rückenlehne anhebende Feder vorzusehen, die einerseits am Arretierhebel und andererseits am Sitzträger angreift und den Arretierhebel elastisch so vorbelastet, daß er gegen einen am Sitzträger vorgesehenen Anschlag gedrückt wird. Gegenüber diesem Anschlag kann sich der Arretierhebel in Längsrichtung des Sitzträgers bewegen. Dadurch wird die Einstellung der Rückenlehne vereinfacht. Will ein Passagier die Rückenlehne steiler stellen, so genügt es, wenn er die Arretierung des Rückenlehnengelenks über die Betätigung freigibt, die Rückenlehne schwenkt dann selbsttätig soweit nach vorn, wie dies der Passagier durch Gegendruck mit seinem Rücken gegen die Rückenlehne zuläßt. Soll die Rückenlehne weiter nach hinten verstellt werden, drückt der Passagier mit seinem Rücken nach Freigabe der Arretierung gegen die Rückenlehne, bis die gewünschte Position erreicht ist. Durch die anhebende Feder wird die Gesamtanordnung zugleich klapperfrei.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. Die Zeichnung zeigt in
- FIG. 1:: eine Seitenansicht eines Sitzträgers, an dem eine Rückenlehne angelenkt ist, dargestellt sind weiterhin eine Höhenverstellung der Sitzhinterkante und das erfindungsgemäße Rückenlehnengelenk und
- FIG. 2:: eine Seitenansichht ähnlich Figur 1 mit einem Rückenlehnengelenk in einer anderen Ausbildung.

Die Figuren zeigen einen Sitzträger 20, der in bekannter Weise an seinen beiden Seiten jeweils von einer vorderen Schwinge 22 und jeweils von einer hinteren Schwinge 24 getragen wird. Beim praktischen Einsatz sind die Schwingen 22, 24 jeweils mit einer Sitzschiene einer ansich bekannten Längsführung verbunden. Wie die Figuren zeigen, ist die hintere Schwinge 24 winkeleinstellbar, hierzu ist eine Einstellvorrichtung 26 vorgesehen. Die beiden hinteren Schwingen 24 sind durch eine quer verlaufende Achse 28 miteinander drehverbunden, entsprechendes gilt auch für die beiden vorderen Schwingen 22.

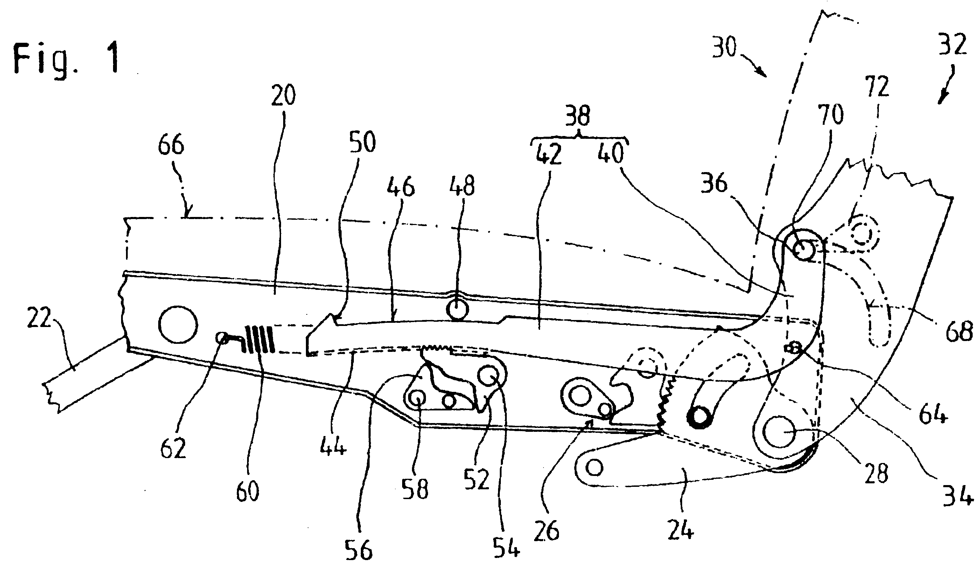

An der Achse 28 ist eine Rückenlehne 30 angelenkt, als tragendes Element hat sie einen Lehnenträger 32. Seine Konstruktion ist ansich bekannt, in der Figur ist nur der untere Bereich eines der beiden vertikalen Träger 34 gezeigt. Wie Figur 1 zeigt, ist dieser Träger in seinem untersten Bereich der Achse 28 angehängt. Die Achse 28 bildet somit das Schwenkgelenk der Rückenlehne. Wie Figur 1 zeigt, befindet sich dieses Schwenkgelenk im unteren Bereich des Sitzträgers 20.

In Richtung der Rückenlehne 30 zu diesem Schwenkgelenk versetzt, und zwar versetzt zur Oberkante der Rückenlehne hin, ist ein Anlenkpunkt 36 für einen Arretierhebel 38 gemäß Figur 1 am Träger 34 ausgebildet. Wie diese Figur zeigt, befindet sich dieser Anlenkpunkt im Bereich der Vorderkante des Trägers 34. Anders ausgedrückt ist der Anlenkpunkt 36 bei in normaler Gebrauchsposition leicht schräg nach hinten gestellter Rückenlehne 30 im wesentlichen lotrecht oberhalb des Schwenkgelenks, das durch die Achse 28 gebildet wird.

Der Arretierhebel 38 ist im wesentlichen L-förmig. Er besteht aus einem kürzeren Teilstück, das im wesentlichen in Richtung der Rückenlehne 30 verläuft, wobei auch hier, wie Figur 1 zeigt, das Teilstück im wesentlichen vertikal verläuft, während die Rückenlehne leicht schräg nach hinten eingestellt ist, sowie aus einem im wesentlichen in Richtung des Sitzträgers 20 verlaufenden, längeren Teilstück. Aus Vereinfachungsgründen wird das erste Teilstück im folgenden vertikaler Schenkel 40 genannt, das zweite Teilstück wird mit horizontaler Schenkel 42 bezeichnet. Damit ist konkret das gezeigte Ausführungsbeispiel angesprochen, andere Ausführungen sind möglich. So kann der Arretierhebel 38 grundsätzlich auch nahezu gestreckt sein, der Anlenkpunkt 36 kann sich in normaler Position der Rückenlehne 30 (leicht nach hinten geneigt eingestellt) auch vertikal unterhalb des Schwenkgelenks befinden. Schließlich kann der Arretierhebel 38 auch mehrteilig sein (siehe hinten).

Wie Figur 1 zeigt, ist der horizontale Schenkel 42 deutlich länger als der vertikale Schenkel 40. Vorzugsweise weist der vertikale Schenkel 40 fünfzig bis einhundert % der Länge des Abstandes von Schwenkgelenk und Anlenkpunkt 36 auf. Im Ausführungsbeispiel beträgt das Verhältnis zwischen drei und vier zu eins. Der vertikale Schenkel 40 ist kürzer als der Abstand zwischen Anlenkpunkt 36 und Schwenkgelenk. Im konkreten, gezeigten Ausführungsbeispiel beträgt der Abstand zwischen Schwenkgelenk und Anlenkpunkt 36 ca. 9 cm, die Länge des vertikalen Schenkels 40 liegt bei etwa 6 cm. Dagegen ist die Länge des horizontalen Schenkels 42 insgesamt etwa 24 cm. Der Anlenkpunkt 36 befindet sich bei normaler Gebrauchsstellung der Rückenlehne 30 oberhalb des Sitzträgers 20. Wird die Rückenlehne 30 innerhalb des zulässigen Bereichs der Einstellungen soweit wie möglich nach hinten eingestellt, befindet sich der Anlenkpunkt 36 in etwa in einer Höhe, die in Verlängerung der Oberkante des Sitzträgers 20 liegt.

An seinem freien Endbereich, der etwa ein Drittel seiner Gesamtlänge ausmacht, ist am horizontalen Schenkel 42 eine Verzahnung 44 vorgesehen. Ihre Zähne weisen nach unten, also zur (nicht dargestellten) Längsführung hin. Gegenüberliegend der Verzahnung 44 ist eine Anlagefläche 46 am horizontalen Schenkel 42 ausgebildet. An ihr liegt ein am Sitzträger 20 befestigter Bolzen an, der ein Stützlager 48 bildet. Die Anlagefläche 46 ist beidseitig durch zwei quer zu ihrer Richtung vorspringende Anschlagflächen 50 begrenzt. Zwischen Anlagefläche 46 und Verzahnung 44 hat der horizontale Schenkel 42 konstante Abmessungen, insbesondere Höhe.

Mit der Verzahnung 44 ist in der dargestellten Verriegelungsposition ein Arretierhebel 52 in Eingriff, er hat eine der Verzahnung 44 entsprechende Verzahnung mit mehreren, beispielsweise fünf bis sieben Zähnen. Er ist um eine Achse 54 schwenkbar am Sitzträger 20 angelenkt. Ihm ist ein Betätigungshebel 56 zugeordnet, der um eine Achse 58 ebenfalls am Sitzträger 20 schwenkbar angelenkt ist, die Achse 58 geht jedoch quer durch zur anderen Seite des Sitzträgers, wodurch die beiden Betätigungshebel 56 jeder Sitzseite miteinander starr drehverbunden sind. Der Betätigungshebel 56 ist im konkret gezeigten Ausführungsbeispiel im wesentlichen V-förmig, er hat zwei Sperrnasen. In der gezeigten Verriegelungsposition sind diese in Anlage an zwei Sperrflanken des Arretierhebels 52. Wird der Betätigungshebel 56 jedoch in Richtung gegen den Uhrzeigersinn gedreht, so blockiert er nicht mehr den Arretierhebel 52, dieser kann vielmehr freikommen, wie im einzelnen später noch dargestellt wird. Bei der konkret gezeigten konstruktiven Ausbildung ist eine Verschwenkung der Rückenlehne innerhalb eines Schwenkwinkels von 55° möglich.

Die Ausbildung der Arretierteile, insbesondere des Arretierhebels 52 und des Betätigungshebels 56, ist ansich beliebig und ist aus dem Stand der Technik auch für andere Verriegelungen bekannt. Anstelle eines Arretierhebels 52 kann auch ein Ritzel eingesetzt werden. Ebenfalls ist eine Triebstock-Einstellvorrichtung möglich.

Der Fahrzeugsitz weist eine Höheneinstellvorrichtung auf, deren Einstellvorrichtung 26 näher der Sitzhinterkante angeordnet ist als der Arretierbereich.

Wie die Figuren zeigen, liegt von den mehreren Zähnen des Arretierhebels 52 derjenige in etwa dem Stützlager 48 direkt gegenüber, der dem vertikalen Schenkel 40 am nächsten ist. Auch befindet sich die Achse 54 näher dem vertikalen Schenkel 40 als die Zähne des Arretierhebels 52. Weiterhin ist eine Feder 60 vorgesehen, die die Rückenlehne 30 nach vorn hin belastet, also in den Figuren in Richtung entgegen dem Uhrzeigersinn. Die Feder 60 ist mit ihrem linken Endbereich am Sitzträger bei 62 eingehakt, ihr in den Figuren rechter Endbereich greift bei 64 am unteren Ende des vertikalen Schenkels 40 an. Sie verläuft in der speziell gezeigten Ausführung damit im wesentlichen parallel zum horizontalen Schenkel 42, ist aber länger als dieser. Durch die gewählte Anordnung belastet sie den blockierten Arretierhebel 38 in einer Drehrichtung in Richtung des Uhrzeigersinnes. Anders ausgedrückt wird durch die Feder 60 die Anlagefläche 46 an das Stützlager 48 gedrückt. Durch die Feder 60 wird das Rückenlehnengelenk klapperfrei.
Wird, wie oben beschrieben, über den Betätigungshebel 56 der Arretierhebel 52 freigegeben, so zieht die Feder 60 den Arretierhebel 38 zum Angriffspunkt 62 hin. Dies bewirkt eine Drehbewegung des Arretierhebels 52 in Gegenrichtung zum Uhrzeigersinn, dessen Verzahnung kommt also frei von der Verzahnung 44 des horizontalen Schenkels 42.

Wie aus den Figuren ersichtlich ist, sind die Teile 38, 52 und 56 flache Bauteile, die aus Stahlblech gestanzt werden können. Insgesamt kann das erfindungsgemäße Rückenlehnengelenk aus sehr wenigen Bauteilen erstellt werden, diese Bauteile sind ausschließlich aus Stahl, hierdurch wird das Recycling des gesamten Sitzes vereinfacht. Der Anlenkpunkt 36 befindet sich hinter dem Rücken und Gesäß eines Sitzbenutzers. Der Arretierhebel 38 verläuft in seinem horizontalen Bereich unter dem Gesäß eines Sitzbenutzers. Der Sitzträger 20 und der Lehnenträger der Rückenlehnen haben jeweils eine Breite, die siebzig %, vorzugsweise nur fünfzig % der äußeren Breite der fertigen Rückenlehne bzw. des fertigen Sitzes beträgt.

In den Figuren ist strichpunktiert der Verlauf einer Polsterung 68 angedeutet. Zu erkennen ist, daß der Verlauf der Polsterung 68 immer vor (in Sitzrichtung) bzw. oberhalb des Arretierhebels 38 ist.

Schließlich ist in Figur 1 noch eine Schnellverstellung der Rückenlehne 30 strichpunktiert dargestellt. Diese Schnellverstellung ist eine vorteilhafte Weiterbildung, sie muß jedoch nicht notwendigerweise vorgesehen sein.

Für die Schnellverstellung ist im Träger 34 des Lehnenträgers 32 eine bogenförmig gekrümmte Kulisse 68 vorgesehen. Im gezeigten Ausführungsbeispiel ist sie kreisbogenförmig und hat ein Zentrum, das sich oberhalb des Schwenkgelenks, etwa auf der Mitte zwischen Anlenkpunkt 36 und Schwenkgelenk befindet. Grundsätzlich kann die Kulisse 68 auch kreisbogenförmig und mit dem Schwenkgelenk als Zentrum ausgeführt sein. Dann aber ist der mögliche Winkel der Schnellverstellung geringer als im dargestellten Ausführungsbeispiel, jedoch bleibt der Arretierhebel 38 bei der Schnellverstellung in Ruhe. In der gezeigten Ausführung dagegen bewegt sich der Arretierhebel 38 der Schnellverstellung, die oben beschriebene Arretiereinrichtung läßt eine gewisse Kippbewegung innerhalb der Arretierposition zu.

Für die Schnellverstellung der Rückenlehne sind die beiden Anlenkpunkte 36 der beiden Arretierhebel 38 durch eine quer verlaufende Achse starr und drehfest miteinander verbunden, diese Achse 70 greift in die Kulisse 68 und bildet mit einem Teilbereich das Kulissenstück. In der in der Figur dargestellten Normalposition wird die Achse 70 durch ein Blockierglied 72 so fixiert, daß sie in der oberen Endposition der Kulisse 68 liegt. In der gezeigten Ausführung dient die Schnellverstellung zum raschen Vorklappen der Rückenlehne 30, wie dies beispielsweise bei zweitürigen Fahrzeugen für den Einstieg in den Fond bekannt ist.

Das Blockierglied 72 hat eine Schwenkachse, die V-förmig versetzt in spitzem Winkel zum Verlauf der Kulisse 68 am Träger 34 angeordnet ist. Durch eine in der Figur nicht dargestellte Betätigungsvorrichtung, beispielsweise durch einen Bowdenzug, kann das Blockierglied 72 aus der gezeigten Blockierstellung nach oben gezogen werden, es wird dabei im Uhrzeigersinn verschwenkt. Dadurch gibt seine Blockiernase, die in der gezeigten Position an der Achse 70 anliegt, die Achse 70 frei, die Achse kann dadurch innerhalb der Kulisse 68 bewegt werden.

Da die Arretierung des erfindungsgemäßen Rückenlehnengelenks im wesentlichen in der Mitte des Sitzträgers 20 erfolgt, werden die Arretierungskräfte günstig (im Sinne eines Fachwerks) in den rahmenförmigen Sitzträger 20 eingeleitet. Bei Einleitung der Arretierkräfte im Bereich des Schwenkgelenks (der Achse 28) ist die Kräfteeinleitung ungünstiger und muß bei gleicher Steifigkeit der Sitzträger 20 stabiler als gemäß der Erfindung ausgebildet werden.

Bei seinen Bewegungen bleibt der horizontale Schenkel 42 des Arretierhebels 38 innerhalb der Seitenwandungen des Sitzträgers 20, er braucht also keinen zusätzlichen Bewegungsraum. Wie die Figur zeigt, befindet sich die Einstellvorrichtung 26 für die hintere Schwinge 24 zwischen dem Schwenkgelenk (Achse 28) und der Arretierung des Arretierhebels 38.

Die Krümmung der Verzahnung 44 und damit auch der Anlagefläche 46 ist so gewählt, daß der arretierte Teil der Verzahnung unabhängig von der Winkeleinstellung der Rückenlehne die dargestellte Orientierung hat. Anstelle einer gekrümmten Ausbildung kann der Arretierhebel 38 auch zweiteilig sein, z. B. kann am Endpunkt des Bezugszeichenstrichs für den waagerechten Schenkel eine gerade Zahnstange oder eine Gewindestange angelenkt sein.

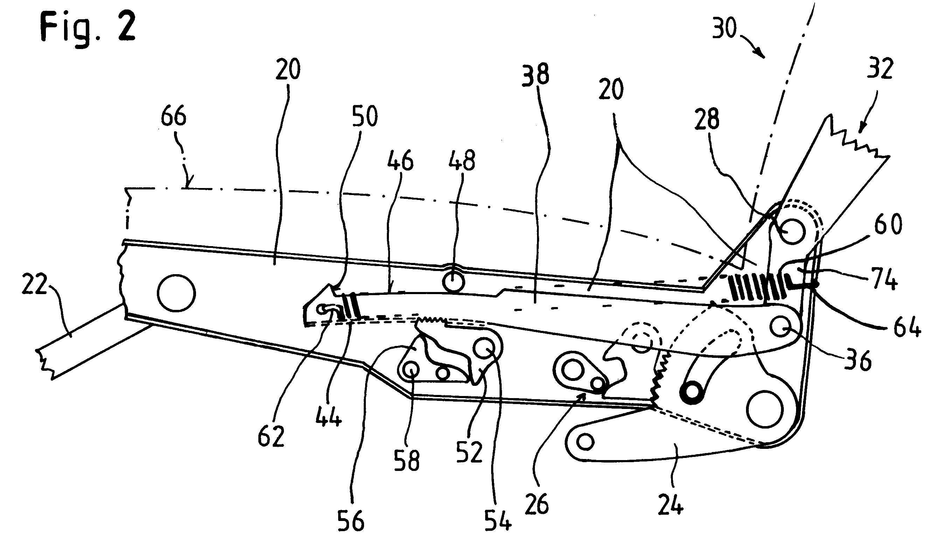

Im Ausführungsbeispiel nach Fig. 2 ist die Achse 28 nicht in einem unteren Bereich des Sitzträgers 20 angeordnet, sondern befindet sich in einer speziell vorgesehenen, hinteren Erhöhung dieses Sitzträgers. Im gezeigten Ausführungsbeispiel liegt sie in einer Verlängerung der Oberkante der Polsterung 66. Der Lehnenträger 32 ist über die Achse 28, die sich in einem oberen Bereich des Sitzträgters 20 befindet, hinaus durch einen Fortsatz 74 verlängert. Der Fortsatz 74 ist kürzer als die maximale Höhe des Sitzträgers. Am Fortsatz 74 befindet sich der Anlenkpunkt 36 für den Arretierhebel 38. Dieser wird nun nicht mehr, wie bei Fig. 1, auf Zug, sondern auf Druck belastet. Die Konstruktion ermöglicht einen größeren Freiraum im Unterschenkel- und Fußbereich für Passagiere, die auf einem Sitz hinter dem erfindungsgemäßen Fahrzeugsitz sitzen.

Ungeändert gegenüber der Ausbildung in Fig. 1 ist in der Ausführung in Fig. 2 die Verzahnung 44 des Arretierhebels 38 sowie die zugehörige Arretiervorrichtung bestehend aus dem Arretierhebel 52, der Achse 54, dem Betätigungshebel 56 und der Achse 58. Die Verzahnung 44 und die zugeordnete, entsprechende Verzahnung des Arretierhebels 52 sind sehr feinstufig gewählt, wodurch ein nahezu stufenfreie Einstellung der Rückenlehne 30 um die Achse 28 ermöglicht wird. Bei der gewählten Verzahnung gibt es keine Fehleingriffe, bei Einschwenken des Arretierhebels 52 in die Arretierstellung wird jeweils unabhängig von der Ausgangssituation eine volle Arretierung erreicht.

Die Feder 60, die die Rückenlehne nach vorn (in Sitzrichtung) zieht, ist zwischen Arretierhebel 38 und Sitzträger 20 angeordnet. Sie verläuft vorzugsweise so, daß sie den Arretierbereich zum Stützlager 48 hin belastet. Dieser Fall ist in Fig. 1 und 2 gegeben.

Im Ausführungsbeispiel nach Fig. 2 ist der Arretierhebel 38 im wesentlichen gradlinig, er verläuft in seiner Längsrichtung im wesentlichen in Längsrichtung des Sitzträgers 20. Je nach konstruktiver Auslegung kann er im Ausführungsbeispiel gemäß Fig. 2 L- förmig ausgebildet sein.

Auch im Ausführungsbeispiel nach Fig. 2 kann eine Schnellverstellung der Rückenlehne vorgesehen sein, wie sie durch die Teile 68, 70 und 72 im Ausführungsbeispiel nach Fig. 1 realisiert ist. Diese zeigt allerdings nur ein realisierbares Beispiel einer Schnellverstellung, andere Ausbildungen sind möglich.

Der Arretierbereich 38 weist in einer anderen Ausführung eine Gewindestange auf, mit der eine am Sitzträger 20 unverrückbar angeordnete, drehbare Mutter in Eingriff steht.

## Patentansprüche

1. Rückenlehnengelenk für einen Fahrzeugsitz mit einem Sitzträger (20), einer an diesem um ein Schwenkgelenk (28) angelenkten Rückenlehne und einer Arretiervorrichtung (44 bis 58) zur Einstellung der Winkellage der Rückenlehne (30) gegenüber dem Sitzträger (20), die einen mit der Rückenlehne über eine Gelenkverbindung verbundenen Arretierhebel (38) aufweist, wobei zu dieser Gelenkverbindung ein Anlenkpunkt (36), der einen Abstand in Längsrichtung der Rückenlehne (30) zum Schwenkgelenk aufweist, gehört, und der Arretierhebel (38) einen sich in Richtung des Sitzträgers (20) erstreckenden, zu einer Vorderkante dieses Sitzträgers (20) weisenden und mit einer Verzahnung (44) versehenen Arretierbereich hat, und wobei am Sitzträger (20) eine mit diesem Arretierbereich zusammenwirkende, lösbare und normalerweise in Eingriff befindliche Sperre (52), der ein Betätigungsglied (56) zugeordnet ist, vorgesehen ist, dadurch gekennzeichnet, daß der Arretierbereich so gekrümmt ist, daß die Verzahnung (44) des Arretierbereichs immer und unabhängig von der Einstellung der Rückenlehne in gleicher Richtung liegt und daß der Arretierhebel (38) unmittelbar an der Rückenlehne (30) im Anlenkpunkt (36) angreift.

2. Rückenlehnengelenk nach Anspruch 1, dadurch gekennzeichnet, daß eine die Rückenlehne (30) anhebende Feder (60) einerseits am Arretierhebel (38) und andererseits am Sitzträger (20) angreift und so angeordnet ist, daß sie den Arretierbereich bei blockiertem Arretierhebel (38) zu einem Stützlager (48) hin belastet.

3. Rückenlehnengelenk nach Anspruch 1 oder 2, dadurch gekennzeichnet, daß die Rückenlehne (30) einen Lehnenträger (32) aufweist, daß im Lehnenträger eine bogenförmige Kulisse (68) für eine Schnelleinstellung der Rückenlehne (30) vorgesehen ist, daß der Arretierhebel (38) mit einem Kulissenstück (70) in die Kulisse (68) eingreift und daß ein lösbares Blockierglied (72) am Lehnenträger (32) vorgesehen ist, das das Kulissenstück (70) an einem Ende der Kulisse (68) fixiert.

4. Rückenlehnengelenk nach einem der Ansprüche 1 bis 3, dadurch gekennzeichnet, daß sich das Schwenkgelenk (28) im oberen Bereich des Sitzträgers (20) befindet.

5. Rückenlehnengelenk nach einem der Ansprüche 1 bis 4, dadurch gekennzeichnet, daß der Arretierbereich gekrümmt ist um einen virtuellen Drehpunkt, der um die effektive Länge des Arretierhebls (38) nach vorn versetzt dem Schwenkgelenk (28) entspricht.

6. Rückenlehnengelenk nach Anspruch 1, dadurch gekennzeichnet, daß der Arretierbereich an seiner, vorzugsweise unteren oder an seiner oberen Seite die Verzahnung (44) aufweist und daß dieser gegenüberliegend am Sitzträger (20) ein Stützlager (48) für die gleitende Anlage der gegenüberliegenden Seite des Arretierbereichs vorgesehen ist.

## Claims

1. Back-rest hinge for a vehicle seat with a seat support (20) and a back-rest hinged to it by means of a swivel joint (28) and a locking mechanism (44 to 58) for adjusting the angle of inclination (30) of the back-rest in relation to the seat support (20), having a locking lever (38) which is hinge-connected to the back-rest at a hinge point (36) whereby this hinge-connection comprises a hinge-point (36) having a distance from the swivel joint along the lengthwise direction of the back-rest (30), and the locking lever (38) has a locking area which extends in the direction of the seat support (20), points toward a front edge of this seat support, and has a toothed area (44), and whereby an interlock means (52) is provided on the seat support (20) which interacts with this locking area, can be released and is normally in mesh, an activating means (56) being associated to the interlock means (52), characterised in that the locking area is curved so that the toothed area (44) of the locking area always lies in the same direction in relation to the locking device, independently of the position of the back-rest, and that the locking lever (38) engages the back-rest directly at the hinge point (36).

2. Back-rest hinge according to Claim 1 characterised in that a spring (60) lifting up the back-rest grips the locking lever (38) on one side and the seat support (20) on the other side, and is designed in such a way that it prestresses the locking area (when the locking lever 38 is blocked) towards a supportive bearing (48).

3. Back-rest hinge according to Claim 1 or 2, characterised in that the back-rest (30) has a back-rest support (32), that a curved wing (68) is provided in the back-rest support for a rapid adjustment of the back-rest (30), that the locking lever (38) grips the wing (68) with a wing piece (70), and that a releasable blocking member (72) is provided on the back-rest support (32) which secures the wing piece (70) to one end of the wing (68).

4. Back-rest hinge according to any of the Claims 1 to 3, characterised in that the swivel joint (28) is located in the upper section of the seat support (20).

5. Back-rest according to one of the Claims 1 to 4, characterised in that the locking area is curved around a virtual focus point which is displaced forward by the effective length of the locking lever (38) and corresponds to the swivel joint (28).

6. Back-rest hinge according to Claim 1, characterised in that the locking area has a toothed area (44) along preferably its lower or its upper side, and that opposing the toothed area a supportive bearing (48) for gliding contact of the opposite side of the locking area is provided on the seat support (20).

## Revendications

1. Articulation de dossier pour un siège de véhicule avec un support de siège (20), un dossier articulé sur ce dernier par le biais d'une articulation de pivotement (28) et un dispositif d'arrêt (44 à 58) pour le réglage de la position relative du dossier (30) par rapport au support de siège (20), ledit dispositif d'arrêt présente un levier d'arrêt (38) qui est relié au dossier par l'intermédiaire d'un assemblage articulé, à cet assemblage articulé appartenant un point d'articulation (36) qui, dans la direction longitudinale du dossier (30), présente une distance par rapport à l'articulation de pivotement, et le lever d'arrêt (38) présentant une zone d'arrêt qui s'étend dans le sens du support de siège (20), montre vers un bord avant de ce support de siège (20) et est pourvue d'une denture (44), et sur le support de siège (20) étant prévu un arrêt (52) qui agit de concert avec cette zone d'arrêt, peut être relâchè et est, en cas normal, en prise et auquel est associé un élément de manoeuvre (56), caractérisée par ie fait que la zone d'arrêt est courbée de teile manière que la denture (44) de la zone d'arrêt se trouve toujours et indépendamment du réglage du dossier dans la même direction, et que le levier d'arrêt (38) saisit directement le dossier (30) sur la point d'articulation (36).

2. Articulation de dossier selon la revendication 1, caractérisée par le fait qu'un ressort (60) soulevant le dossier (30) saisit d'un côté le levier d'arrêt (38) et, de l'autre côté, le support de siège (20) et est disposé de telle manière qu'il sollicite la zone d'arrêt vers un palier de soutien (48) lorsque le lever d'arrêt (38) est bloqué.

3. Articulation de dossier selon la revendication 1 ou 2, caractérisée par le fait que le dossier (30) présente un support de dossier (32), que l'on prévoit une coulisse en arc (68) dans le support de dossier pour un réglage rapide du dossier (30), que le levier d'arrêt (38) engrène dans la coulisse (68) avec une pièce de coulisse (70), et qu'un élément de blocage (72) qui peut être relâché est prévu sur le support de dossier (32) et fixe la pièce de coulisse (70) à une extrémité de la coulisse (68).

4. Articulation de dossier selon l'une des revendications 1 à 3, caractérisée par le fait que l'articulation de pivotement (28) se trouve dans la zone supérieure du support de siège (20).

5. Articulation de dossier selon l'une des revendications 1 à 4, caractérisée par le fait que la zone d'arrêt est courbée autour d'un centre de rotation virtuel qui, déplacé en avant de la longueur effective du levier d'ariêt (38), correspond à' l'articulation de pivotement (28).

6. Articulation de dossier selon la revendication 1, caractérisée par le fait que la zone d'arrêt présente la denture (44) de préférence sur sa face inférieure ou sa face supérieure, et que, en face de ladite denture, un palier de soutien (48) pour le contact glissant de la face opposée de la zone d'arrêt est prévu sur le support de siège (20).
